# EUROPÄISCHE PATENTANMELDUNG

(11) **EP 3 988 271 A1**
(43) Veröffentlichungstag der Anmeldung: **27.04.2022**
(21) Anmeldenummer: 21203814.5
(22) Anmeldetag: 20.10.2021
(51) Int. Cl.: B29C 35/08, B29C 35/02

(54) **VERFAHREN ZUR HERSTELLUNG EINES GRANULAT-KÖRPERS**

(30) Priorität: 20.10.2020 DE 102020127620
(71) Anmelder: Conradi + Kaiser GmbH, 56271 Kleinmaischeid (DE)
(72) Erfinder: SEUSER, Philipp, 56271 Kleinmaischeid (DE)
(74) Vertreter: Braun-Dullaeus Pannen Emmerling Patent- & Rechtsanwaltspartnerschaft mbB

(57) **Zusammenfassung**

Die Erfindung betrifft ein Verfahren zur Herstellung eines Gummigranulat-Körpers und/oder eines EVA-Granulat-Körpers, wobei ein Gummigranulat und ein Bindemittel umfassende Mischung und/oder ein EVA-Granulat und ein Bindemittel umfassende Mischung in einer Form unter Druck gesetzt und erhitzt wird, wobei nach einem zumindest größtenteils erfolgtem Aushärten des Bindemittels der Gummigranulat-Körper aus der Form entnommen wird, und wobei die in der Form befindliche Mischung mit Mikrowellen-Strahlung beaufschlagt wird, so dass die Mischung durch die Mikrowellen-Strahlung erwärmt wird. Des Weiteren betrifft die Erfindung eine Vorrichtung zur Herstellung eines Gummigranulat-Elements und/oder eines EVA-Granulat-Elements, insbesondere zur Durchführung des erfindungsgemäßen Verfahrens, aufweisend eine Form zur Aufnahme einer Mischung, aufweisend eine ein Gummigranulat und ein Bindemittel und/oder eine ein EVA-Granulat und ein Bindemittel umfassende Mischung, und eine Energiequelle zum Erwärmen der Mischung, wobei die Energiequelle ein Mikrowellen-Emitter ist.

## Beschreibung

Die Erfindung betrifft ein Verfahren zur Herstellung eines Gummigranulat-Körpers und/oder eines EVA-Granulat-Körpers, wobei eine ein Gummigranulat und ein Bindemittel umfassende Mischung und/oder eine ein EVA-Granulat und ein Bindemittel umfassende Mischung in einer Form unter Druck gesetzt und erhitzt wird und wobei nach einem zumindest größtenteils erfolgten Aushärten des Bindemittels der Gummigranulat-Körper aus der Form entnommen wird. Des Weiteren betrifft die Erfindung eine Vorrichtung zur Herstellung eines Gummigranulat-Elements und/oder eines EVA-Granulat-Elements, insbesondere zur Durchführung des erfindungsgemäßen Verfahrens, aufweisend eine Form zur Aufnahme einer Mischung, umfassend ein Gummigranulat und ein Bindemittel, und eine Energiequelle zum Erwärmen der Mischung.

Die Herstellung von Gummigranulat-Körpern erfolgt gemäß dem Stand der Technik, indem in einem ersten Schritt ein Gummigranulat mit einem Bindemittel vermischt wird, so dass die Granulat-Teilchen von dem Bindemittel benetzt werden. Die das Gummigranulat und das Bindemittel enthaltende Mischung wird in eine Form gegeben und zum schnellen Aushärten des Bindemittels erhitzt. Die hierfür verwendeten Gummigranulate können beispielsweise bei der Verwertung von Altreifen oder der Verwertung von KFZ-Dichtungen und Bahnen zur Abdichtung von Gebäuden aus EPDM-Gummi gewonnen werden. Altreifen-Granulat besteht oft aus einer GummiMischung. Die Mischung kann SBR (Styrol-Butadien-Kautschuk), Naturkautschuk, NBR (Acrylnitril-Butadien-Kautschuk), und/oder BR (Butadien-Kautschuk) enthalten.

Andere geeignete Elastomere sind beispielsweise EVAC (Ethylen-Vinylacetate-Copolymer), auch EVA genannt, oder das zuvor bereits erwähnte EPDM (ethylene propylene diene monomer rubber).

Entsprechend geeignete Bindemittel härten zum Beispiel bei dem Kontakt mit Wasser aus und sind dem Stand der Technik zu entnehmen. Besonders geeignet sind Polyurethane-basierte Bindemittel.

Je nach Einsatzzweck des Gummigranulat-Körpers kann es erforderlich sein, die in der Form befindliche Mischung mit mehr oder weniger Druck zu beaufschlagen, beispielsweise mittels eines in die Form einfahrenden, druckbelasteten Stempels.

Durch die Applikation des Drucks werden die Hohlräume in der Mischung kleiner. Ein Grund hierfür ist die Kompression der Granulat-Teilchen und deren damit einhergehende Verformung, wodurch die in den Hohlräumen befindliche Luft aus der Mischung herausgepresst wird. Gleichzeitig werden feinere Granulat-Teilchen in die zwischen den größeren Teilchen vorhandenen Hohlräume gepresst. Ein weiterer Grund hierfür ist die Füllung der vorhandenen Hohlräume durch das fließfähige Bindemittel.

Die Höhe des Drucks hat somit einen wesentlichen Einfluss auf das spezifische Gewicht des fertigen Gummigranulat-Körpers. Gummigranulat-Körper mit höherer Dichte haben tendenziell niedrigere Dämpfungseigenschaften und sind deshalb beispielsweise für eine Anwendung als Fallschutz-Belag weniger geeignet. Als Falllschutz geeignete Körper weisen im Allgemeinen eine Dichte zwischen 500 bis 1.000 Kilogramm pro Kubikmeter auf.

Eine darüber hinaus gehende Dichte erlaubt es hingegen, solche Gummigranulat-Körper entsprechend höher zu belasten. Sie sind zum Beispiel für das Überfahren mit schwereren Fahrzeugen geeignet. Je nach Verwendungszweck des Gummigranulat-Körpers werden bei dessen Aushärtung in der Form somit Drücke appliziert, bei denen von mehreren Kilopascal bis hin zu mehreren 100 Kilopascal auf die Mischung einwirken.

Um die fertige Mischung möglichst lange verarbeitungsfähig zu halten, wird ein Bindemittel gewählt, welches bei Raumtemperatur nur langsam aushärtet. Üblicherweise steigt die Reaktionsgeschwindigkeit des Bindemittels mit der Temperatur exponentiell an. Somit lässt jede Temperaturerhöhung das Bindemittel entsprechend schneller aushärten. Damit einhergehend wird durch die gewählte Temperatur die benötigte Verweilzeit der Mischung in der Form beeinflusst.

Um die Verweilzeit in der Form kurz zu halten, wird die Mischung zum einen möglichst schnell auf die gewünschte Prozess-Temperatur erwärmt. Daran anschließend wird die Temperatur vorzugsweise im Wesentlichen gehalten, so dass hier von einer Plateauphase gesprochen werden kann. Der weiteren Temperaturerhöhung sind nämlich Grenzen gesetzt. Würde die Mischung über die gewünschte Prozess-Temperatur hinaus weiter erhitzt, droht die Gefahr der Beschädigung des Gummigranulats durch Überhitzung, welche im Extremfall zu einer Pyrolyse des Materials führen kann.

Eine für die Erwärmung oft verwendete Wärmequelle ist eine elektrische Heizung, mit der die Form erhitzt wird. Der Nachteil des Aufheizens der Mischung über die Form liegt jedoch darin, dass aufgrund der schlechten Wärmeleitfähigkeit des Gummigranulats die Wärme nur relativ langsam von außen in das Innere der Mischung übertragen wird. Dies ist insbesondere bei entsprechender Dicke des zu formenden Körpers ein Problem.

Die schlechte Wärmeleitfähigkeit führt zu einem Temperaturprofil, welches die Mischung von außen nach innen durchläuft. Dies kann zur Folge haben, dass die Kontaktflächen der Mischung zur Form überhitzt werden, während im Inneren der Mischung noch nicht die erforderliche Temperatur zum Aushärten des Bindemittels erreicht wurde. Elektrische Heizungen ermöglichen aber dessen ungeachtet die Produktion von sehr dichten Gummigranulat-Körpern, beispielsweise aus sehr fein gemahlenem und hochverdichtetem Gummigranulat, da die Wärmeübertragung in das Innere der dichten Mischung mittels Wärmeleitung gewährleistet werden kann. Diese Anmeldung stellt sich die Aufgabe, eine alternative Wärmequelle für die Herstellung eines Gummigranulat-Körpers aus der eingangs genannten Mischung vorzuschlagen. Eine weitere Aufgabe der Anmeldung ist es, eine Wärmequelle für die Herstellung eines Körpers aus einer ein EVA (Ethylen-Vinylacetat-Copolymer) -Granulat und ein Bindemittel umfassenden Mischung vorzuschlagen.

Ein Kerngedanke der Erfindung ist es, das eingangs beschriebene Verfahren zur Herstellung eines Gummigranulat-Körpers respektive Elements derart auszugestalten, dass die in der Form befindliche Mischung mit Mikrowellen-Strahlung beaufschlagt wird, so dass die Mischung mittels der Mikrowellen-Strahlung erwärmt wird. Des Weiteren wird vorgeschlagen, die eingangs beschriebene Vorrichtung zur Herstellung eines Gummigranulat-Elements derart auszugestalten, dass die Energiequelle ein Mikrowellen-Emitter ist. Ein weiterer Kerngedanke der Erfindung ist es, auf dieselbe Art und Weise eine ein EVA (Ethylen-Vinylacetat-Copolymer) -Granulat und ein Bindemittel umfassende Mischung mit Mikrowellen-Strahlung zu beaufschlagen. Insofern gilt das im Folgenden für die Herstellung eines Gummigranulat-Elements Beschriebene genauso für das Verfahren zur Herstellung eines EVA-Granulat-Elements und die hierzu vorgeschlagene Vorrichtung.

Ein wesentlicher Vorteil der erfindungsgemäßen Lösung ergibt sich daraus, dass sich die Mischung durch die Mikrowellen-Strahlung von innen heraus, also quasi selbst erwärmt. Der Temperaturanstieg der Mischung erfolgt somit nicht entlang einer von außen nach innen sich verschiebenden Front, sondern in der Mischung selbst. Auf diese Weise werden die ansonsten während der Erwärmung entstehenden Temperaturdifferenzen zwischen den Innen- und Außenbereichen der Mischung vermieden.

Die Mischung härtet bei dem erfindungsgemäßen Verfahren gleichmäßig aus und der Gummigranulat-Körper erreicht schneller den Zustand, in dem seine Konsistenz ausreichend fest ist, um ihn aus der Form entnehmen zu können. Der Einsatz des Mikrowellen-Emitters zum Erwärmen der Mischung ermöglicht somit eine kürzere Prozess-Zeit.

Indem der Mischung die Wärme nicht mehr von außen über die Form zugeführt werden muss, besteht zudem keine Gefahr, dass die in Kontakt mit der Form stehenden Außenbereiche der Mischung beim Erwärmen überhitzten. Ebenso wird vermieden, dass die Wärme nicht den ganzen Körper erreicht. Insbesondere ist die Gleichmäßigkeit der Erwärmung der Mischung durch die Mikrowellen-Strahlung unabhängig von dem in der Form auf die Mischung applizierten Druck und damit von der für den fertigen Gummigranulat-Körper vorgesehenen Dichte. Ein weiterer Vorteil ergibt sich daraus, dass eine für die Erwärmung der Mischung erforderliche Strahlungsenergie mittels Leistungsregulierung des Mikrowellen-Emitters leicht an die Dichte der Mischung angepasst werden kann.

Zudem ist zu erwarten, dass die Leistung sich auch selbst reguliert, da die Mikrowellen durchströmte Masse je nach Dichte mehr oder weniger Mikrowellen absorbiert und dadurch aufgrund der höheren Dichte proportional mehr Energie aufnimmt.

Ein wichtiger die Dichte des Körpers bestimmender Faktor ist die Körnung des Gummigranulats. Sie liegt je nach Anwendung zwischen 1 - 5 mm, bei fein gemahlenem Gummigranulat für höher verdichtete Körper üblicherweise zwischen 0,5 - 1,5 mm, es finden aber auch noch kleinere Körnungen mit bis zu 0,1mm Verwendung. Bei der Körnung des EVA-Granulats ist darauf zu achten, dass bei einem Vorliegen des EVA als Schaumstoff dessen Struktur bei der Herstellung des Granulats zumindest im Wesentlichen erhalten bleibt. Insofern sollte hier die Körnung an die Größe der Zellen des Schaumstoffs angepasst werden. Somit werden bei einer Verwendung von EVA-Schaumstoff größere Körnungen als bei dem fein gemahlenen Gummigranulat gewählt.

Eine Mikrowellen-Strahlung im Sinne dieser Anmeldung ist eine Strahlung im Bereich von 300 Megahertz bis 1000 Gigahertz, vorzugsweise von 800 Megahertz bis 3 Gigahertz. Die optimale Erwärmung wird erreicht durch die Wahl einer oder mehrerer geeigneter Frequenzen oder Frequenzbereiche aus diesem Frequenzband. Werden mehrere Frequenzen oder Frequenzbereiche aus dem Frequenzband ausgewählt, werden diese vorzugsweise zeitgleich appliziert. Die Wahl der Frequenz oder des Frequenzbereichs wird insbesondere bestimmt durch die frequenzabhängige Absorption der Mikrowellen an bzw. in dem zu erhitzenden Material, abhängig von dessen Permittivität, dessen spezifischen elektrischen Widerstand sowie den magnetischen Verlusten. Industriell verfügbare und damit kostengünstige Mikrowellengeräte nutzen meist eine Frequenz, die in dem Frequenzbereich zwischen 900 und 950 Megahertz oder zwischen 2,4 und 2,5 Gigahertz liegt.

Natürlich steigt die Temperatur der Mischung immer weiter an, je länger man sie mit Mikrowellen bestrahlt. Um eine Überhitzung der Mischung zu vermeiden, ist es von Vorteil, eine gesteuerte Leistungsdichte der Mikrowelle-Strahlung vorzusehen. Das anzustrebende Temperaturprofil besteht wie zuvor beschrieben vorzugsweise aus einem möglichst steilen Temperaturanstieg mit nachfolgender Plateau-Phase. Eine geeignete Plateau-Phase liegt beispielsweise bei 140° Celsius.

EVA beginnt je nach Typ bereits bei 70 °C zu schmelzen .Ein besonderer Vorteil der Erfindung ist, dass durch die Erwärmung mittels Mikrowellen eine gleichmäßige Erwärmung mit erheblich weniger Risiko bei Verwendung eines EVA-Schaumstoff-Granulats möglich ist. Ein Schmelzen des EVA würde die vorliegende Schaumstoffstruktur zerstören und somit das Material verändern.

Von Vorteil ist es, wenn dem Bindemittel ein Katalysator beigegeben wird, welcher die Aushärtung des Bindemittels ab einer bestimmten Temperatur sehr stark beschleunigt. Der hierfür eingesetzte Katalysator bzw. Beschleuniger wird bei seiner Trigger-Temperatur ausgelöst. Aus dem Stand der Technik sind unterschiedliche Katalysatoren mit verschiedenen Trigger-Temperaturen bekannt. Die Beschleunigung der Aushärtung kann mit einem dem gemäßen Katalysator im Bindemittel beispielsweise auf eine Temperatur von 80°C gesetzt werden.

Von besonderem Vorteil ist es, wenn dem Bindemittel ein Suszeptor beigegeben wird. Derzeit für die Aushärtung eines Gummigranulat-Körpers benutzte Bindemittel werden durch Bestrahlung mit Mikrowellen-Strahlung kaum oder gar nicht erwärmt. Sie sind als Kohlenwasserstoff-Verbindung sozusagen mikrowellen-transparent. Die gewünschte Prozess-Temperatur wird zumindest im Wesentlichen mit der Erwärmung des im Gummigranulat befindlichen Graphits durch die Mikrowellen-Strahlung bereitgestellt.

Dem Bindemittel kann ein Suszeptor beigemischt werden, welcher mit den Mikrowellen wechselwirkt und sich somit aufheizt. Das Bindemittel mit Suszeptor wird dann auch direkt und nicht nur über das Gummigranulat aufgeheizt. Geeignete Suszeptoren sind zum Beispiel Graphite oder einfache Kohlenstoffe. Ein geeigneter Suszeptor ist beispielsweise Blähgraphit, welcher im Gummigranulat-Körper zusätzlich auch noch flammhemmend wirkt, so dass er das Brandverhalten des Körpers positiv beeinflusst.

Sollte das eingesetzte Gummigranulat kein als Suszeptor für die Mikrowellen wirkendes Graphit enthalten, kann auch hier die Wechselwirkung mit den Mikrowellen durch einen geeigneten Suszeptor erreicht werden.

Das Bindemittel kann auch ein Mehr-Komponenten-Bindemittel, insbesondere ein 2-Komponenten-Bindemittel sein. Hier kann eine der Komponenten das der Mischung zum Aushärten beigegebene Wasser zumindest teilweise ersetzt. Von Vorteil ist es auch, wenn die Form und/oder der Emitter der Mikrowellen-Strahlung sich während des Aushärtens des Bindemittels in der Form relativ zu einander bewegen. Hierdurch können lokale Temperatur-Spots in der Mischung verringert oder sogar ganz vermieden werden. Gleiches gilt für eine Bewegung eines eventuell eingesetzten Reflektors der Mikrowellen-Strahlung.

In einer besonders vorteilhaften Ausführungsform wird die Form entlang einer Mehrzahl von Emittern der Mikrowellen-Strahlung bewegt. Die erfindungsgemäße Vorrichtung weist somit vorzugsweise eine Mehrzahl von Emittern der Mikrowellen-Strahlung auf. Dies ermöglicht eine bessere Dosierbarkeit und Verteilung der Mikrowellen-Strahlung. Insbesondere lässt sich hierdurch die Einwirkung der Strahlung auf die Mischung, beispielsweise beim Durchlaufen der Form durch eine Art Mikrowellen-Tunnel, auf die gegebenen Mischungsverhältnisse, den Druck und/oder die Mischungsmenge optimieren.

In diesem Zusammenhang ist es ebenfalls vorteilhaft, wenn die erfindungsgemäße Vorrichtung ein Transportelement für die Form aufweist und wenn die Emitter entlang der Förderstrecke des Transportelementes angeordnet sind. Eine solche Förderstrecke kann automatisiert betrieben werden.

Von besonderem Vorteil ist es, wenn das Material der Form zumindest teilweise ein Mikrowellen-transparentes Material umfasst. Hierzu eignet sich insbesondere ein Glimmer, da er druckresistent ist. Insbesondere eignet sich ein Kunstglimmer, bei dem zerkleinerter Glimmer mit einem Kunstharz-Bindemittel verpresst und verbacken wird. Ein solcher Glimmer ist unter dem Handelsnamen Mikanit bekannt. Ein weiteres geeignetes Material ist Teflon (PTFE).

Vorteilhaft ist es aber auch, wenn die Form vor dem Einfüllen der Mischung erwärmt wird. Auf diese Weise kann gewährleistet werden, dass die Mischung nicht auch noch die Form erwärmen muss, was zu einer Temperaturabsenkung der Mischung im Bereich der Grenzflächen führen würde.

Die Mikrowellen-Transparenz von Glimmerplatten verhindern und die Reflektionseigenschaften von Metall erschweren ein Aufwärmen der Form durch Mikrowellen. Das Aufwärmen einer Metallform würde zudem viel Mikrowellen-Energie benötigen. Um insbesondere in den ersten Durchläufen des Verfahrens zu verhindern, dass die in der Mischung erzeugte Wärme aufgrund der noch kalten Form nach außen hin abfließt, ist es von Vorteil, die Form zu temperieren. Die Temperierung der Form kann bevorzugt elektrisch, beispielsweise mittels Heizpatronen oder heißer Luft erfolgen.

Eine besonders geeignete Form für das erfindungsgemäße Verfahren und die Vorrichtung ist eine Stahlform mit einem oder mehreren Glimmer- und/oder, Teflon-Fenstern, welche einen Eintritt der Mikrowellen in die Form ermöglicht, oder auch eine komplette Glimmer-Form, gegebenenfalls verstärkt mit einem Metallrahmen und/oder Verschraubungen aus Metall zur besseren Aufrechterhaltung des Drucks während der Aushärtung des Bindemittels in der Form.

Alternativ oder ergänzend eignen sich auch andere Mikrowellen-transparente Formmaterialien, beispielsweise ein PET (Poly-Ethylen-Terephthalat) umfassendes oder daraus bestehendes Material: PET ist zerspanbar, leicht und unempfindlich gegen Stöße.

Ein ebenfalls geeignetes Material mit geringer dielektrischer Wechselwirkung mit Mikrowellen ist PTFE und gefülltes PTFE. Als mögliches Füllmaterial kann Glasfaser in einem Verhältnis von 5-40%, vorzugsweise von 15-25% beigegeben werden.

Vorzugsweise wird nach der Befüllung der Form die Kompression der Gummigranulat-Bindemittel-Mischung sichergestellt, indem Spangen und/oder Bänder von außen die Form zusammen halten. Auf diese Weise ist die Form für die Zeit der Bestrahlung unabhängig von einem Kompressionsdruck und kann durch einen Mikrowellenofen gefahren werden.

## Patentansprüche

1. Verfahren zur Herstellung eines Gummigranulat-Körpers und/oder eines EVA-Granulat-Körpers, wobei ein Gummigranulat und ein Bindemittel umfassende Mischung und/oder ein EVA-Granulat und ein Bindemittel umfassende Mischung in einer Form unter Druck gesetzt und erhitzt wird, wobei nach einem zumindest größtenteils erfolgtem Aushärten des Bindemittels der Gummigranulat-Körper und/oder EVA-Granulat-Körper aus der Form entnommen wird,
**dadurch gekennzeichnet,**
**dass** die in der Form befindliche Mischung mit Mikrowellen-Strahlung beaufschlagt wird, so dass die Mischung durch die Mikrowellen-Strahlung erwärmt wird.

2. Verfahren nach Anspruch 1,
**dadurch gekennzeichnet,**
**dass** dem Bindemittel ein Katalysator beigegeben wird, welcher die Aushärtung des Bindemittels oberhalb einer bestimmten Temperatur beschleunigt.

3. Verfahren nach Anspruch 1 oder 2,
**dadurch gekennzeichnet,**
**dass** dem Bindemittel ein Suszeptor beigegeben wird.

4. Verfahren nach einem der vorangegangenen Ansprüche,
**dadurch gekennzeichnet,**
**dass** die Form und/oder der Emitter der Mikrowellen-Strahlung sich während des Aushärtens des Bindemittels relativ zu einander bewegen.

5. Verfahren nach einem der vorangegangenen Ansprüche,
**dadurch gekennzeichnet,**
**dass** die Form entlang einer Mehrzahl von Emittern der Mikrowellen-Strahlung geführt wird.

6. Verfahren nach einem der vorangegangenen Ansprüche,
**dadurch gekennzeichnet,**
**dass** die Form vor dem Einfüllen der Mischung erwärmt wird.

7. Vorrichtung zur Herstellung eines Gummigranulat-Elements und/oder eines EVA-Granulat-Elements, insbesondere zur Durchführung eines Verfahrens nach einem der vorangegangenen Ansprüche, aufweisend eine Form zur Aufnahme einer Mischung, umfassend ein Gummigranulat und ein Bindemittel und/oder ein EVA-Granulat und ein Bindemittel, und eine Energiequelle zum Erwärmen der Mischung,
**dadurch gekennzeichnet,**
**dass** die Energiequelle ein Mikrowellen-Emitter ist.

8. Vorrichtung nach Anspruch 7,
**dadurch gekennzeichnet,**
**dass** das Material der Form zumindest teilweise Glimmer und/oder Teflon umfasst.

9. Vorrichtung nach einem der Ansprüche 7 oder 8,
**dadurch gekennzeichnet,**
**dass** die Vorrichtung eine Mehrzahl von Emittern der Mikrowellen-Strahlung aufweist.

10. Vorrichtung nach Anspruch 9,
**dadurch gekennzeichnet,**
**dass** die Vorrichtung ein Transportelement für die Form aufweist und dass die Emitter entlang der Förderstrecke des Transportelementes angeordnet sind.
